# EUROPEAN PATENT APPLICATION

(11) **EP 3 241 476 A1**
(43) Date of publication of application: **08.11.2017**
(21) Application number: 16168147.3
(22) Date of filing: 03.05.2016
(51) Int. Cl.: A47L 9/28

(54) **VACUUM CLEANER**

(71) Applicant: Koninklijke Philips N.V., 5656 AE Eindhoven (NL)
(72) Inventor: van der Kooi, Johannes, 5656 AE Eindhoven (NL); Koopmans, Emiel, 5656 AE Eindhoven (NL)
(74) Representative: Steenbeek, Leonardus Johannes

(57) **Abstract**

In a vacuum cleaner (VC) comprising a motor-fan aggregate (A), and a control for controlling a power setting (PS) of the motor-fan aggregate (A), a processor (µP) is arranged for protecting the motor-fan aggregate (A) from overheating and/or entering into a stall regime in dependence on an input that is representative of the rotation speed (N) of the aggregate (A). Using a power setting (PS) of the motor-fan aggregate (A) is one straightforward way to obtain an input that is representative of the rotation speed (N) of the aggregate (A), while using a current through the motor-fan aggregate (A) is another straightforward way to obtain that input. Preferably, the processor (µP) is arranged for protecting the motor-fan aggregate (A) further in dependence on a pressure difference between on the one hand a position upstream or downstream of the motor-fan aggregate (A), and on the other hand, ambient, a pressure difference over a known component, a pressure difference over the motor-fan aggregate (A), and/or a rotation speed of the motor-fan aggregate (A). Preferably, the processor (µP) is arranged for protecting the motor-fan aggregate (A) by opening a valve (ECV) upstream of the motor-fan aggregate (A), and/or by lowering a rotation speed of the motor-fan aggregate (A).

## Description

### FIELD OF THE INVENTION

The invention relates to a vacuum cleaner.

### BACKGROUND OF THE INVENTION

Vacuum cleaners comprise an aggregate formed by a fan and a motor for driving the fan. Generally, vacuum cleaner aggregates need cooling flow to prevent the aggregate from overheating. Usually the air flow which is generated by the aggregate itself is used as cooling flow. This means that the aggregate always needs a certain amount of air flow and thus the inlet cannot be blocked completely. In case the inlet of a vacuum cleaner is blocked, the aggregate would overheat and may break down. This problem is usually solved by means of a safety valve, which opens when a specific pressure is reached. Because of the blockage of the inlet, the aggregate will generate pressure. If the pressure is sufficient high (and thus the flow rate sufficient low), the safety valve will open and provide the aggregate with the required amount of cooling flow.

US 6,349,738 discloses a bleed valve for introducing bled fluid to a mainstream fluid flowing through apparatus across which a pressure differential occurs. The bleed valve is adapted to open so as to bleed fluid into the mainstream fluid when the pressure differential across the apparatus falls below a predetermined value.

### SUMMARY OF THE INVENTION

In prior art vacuum cleaners, such a bleed valve is dimensioned for the maximum suction power setting. For lower suction power settings, the bleed valve does not provide sufficient protection on its own, but this is of no big concerns as prior art vacuum cleaners allow for sufficient leakage elsewhere so that the motor is not too easily overheated. However, modem energy-conscious vacuum cleaners do not have a leakage that is sufficient to protect the motor, so that a new solution is needed to protect a vacuum cleaner motor from overheating when the suction power setting is not maximal. It is not a suitable solution to simply dimension the safety valve for a power setting lower than the maximum power setting, as this would result in the safety valve opening for power settings higher than that lower power setting for which the safety valve has been dimensioned.

It is, inter alia, an object of the invention to provide an improved vacuum cleaner. The invention is defined by the independent claims. Advantageous embodiments are defined in the dependent claims.

These and other aspects of the invention will be apparent from and elucidated with reference to the embodiments described hereinafter.

### BRIEF DESCRIPTION OF THE DRAWINGS

Fig. 1 illustrates an embodiment of a vacuum cleaner VC in which a pressure difference P is measured between on the one hand, a chamber upstream of an aggregate A, and on the other hand, ambient;
Fig. 2 illustrates an embodiment of vacuum cleaner VC in which pressure difference P is measured between on the one hand, a chamber downstream of aggregate A, and on the other hand, ambient;
Figs. 3A and 3B illustrate embodiments of a vacuum cleaner VC in which pressure difference P is measured over a known component;
Fig. 4 illustrates an embodiment of vacuum cleaner VC in which pressure difference P is measured over aggregate A;
Fig. 5 illustrates an embodiment of vacuum cleaner VC in which, controlled by microprocessor µP, action is taken if a rotation speed N of aggregate A exceeds a threshold value N_{threshold} depending on a power setting PS;
Fig. 6 illustrates an embodiment of vacuum cleaner VC having an electronically controlled valve ECV that is controlled by microprocessor µP, which alternatively or additionally controls aggregate A to shut it down or at least lower its rotation speed;
Fig. 7 illustrates a relation between pressure drop H (in mBar) and flow rate Q (in l/s) through a component;
Fig. 8 illustrates aggregate performance by a relation at constant voltage between rotation speed S (in rpm) and the flow rate Q through an aggregate for one power setting for four different aggregates of a same type; and
Fig. 9 illustrates a motor-fan performance by a relation at constant voltage between the pressure H - flow rate Q (curves with small balls ●), and the rotation speed S - flow rate Q (curves with small triangles ▲) through the aggregate, for five different power settings of the same aggregate.

### DESCRIPTION OF EMBODIMENTS

Apart from the above-mentioned overheating problem, at low air flow rates and high pressures the aggregate can enter into a stall regime. In that regime stall occurs on the fan blades, reducing the performance of the fan. The stall effect also produces a very distinguish sound (helicopter like). Consumers can experience that as being bad for the vacuum cleaner, and dislike the use of it. The safety valve can be designed such that the aggregate will never enter the stall regime.

In an embodiment of the invention, the flow rate is determined with a known relation, coupled to the power setting, and for each power setting a threshold flow rate is determined in order to prevent the aggregate from overheating or entering into the stall regime.

It is alternatively possible to use the rotation speed of the aggregate directly, instead of using the power setting as an input that is representative of the rotation speed. Doing so may have advantages if the mains voltage fluctuates, as in such cases the relation between power setting and rotation speed also fluctuates. This embodiment of the invention creates a safety valve by measuring the speed of rotation of the aggregate (to determine the performance of the fan) and simultaneously measuring the pressure over, or the flow-rate through, the fan. Every speed of rotation will than have its threshold, on pressure difference or flowrate, at which action should be undertaken in order to prevent overheating of the aggregate or to prevent the aggregate to entering the stall regime.

The flow rate can be determined in different ways using:
1. Pressure difference between the chamber upstream or downstream of the aggregate and ambient pressure (as currently designed safety valves), or
2. Pressure difference over a component where the relation between pressure and flow is known and does not change in time, or
3. Pressure difference over the aggregate, or
4. Rotation speed of the aggregate. Only this last option is not possible if the rotation speed is used directly instead of the power setting, in combination with any of the above 3 pressure differences.

These four ways to determine the flow rate will be described in more detail below.

### 1. Pressure difference between the chamber upstream or downstream of the aggregate and ambient pressure (as currently designed safety valves).

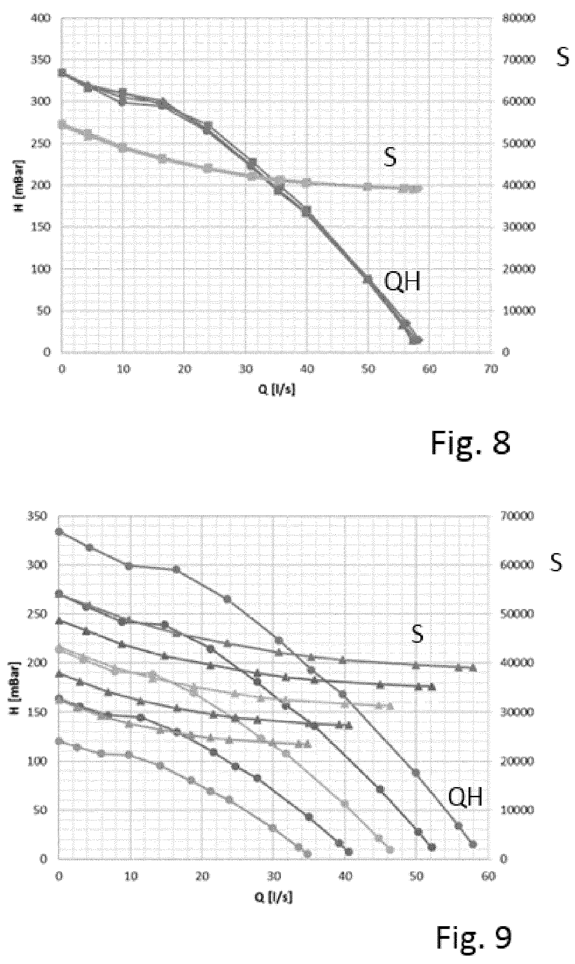

The same pressure difference where the currently designed safety valves work on (chamber upstream aggregate - ambient) can be used in combination with the QH-curve (flow rate Q - pressure H relation) of the aggregate in order to determine the flow rate. For every power setting the required cooling flow is different (a lower power setting requires a lower cooling flow). Next to that, for every power setting there exists a different relation between pressure H and flow rate Q of the aggregate (see Fig. 9). This means that for every power setting a different relation between pressure H and flow rate Q is used to determine whether enough cooling flow is passing through the aggregate.

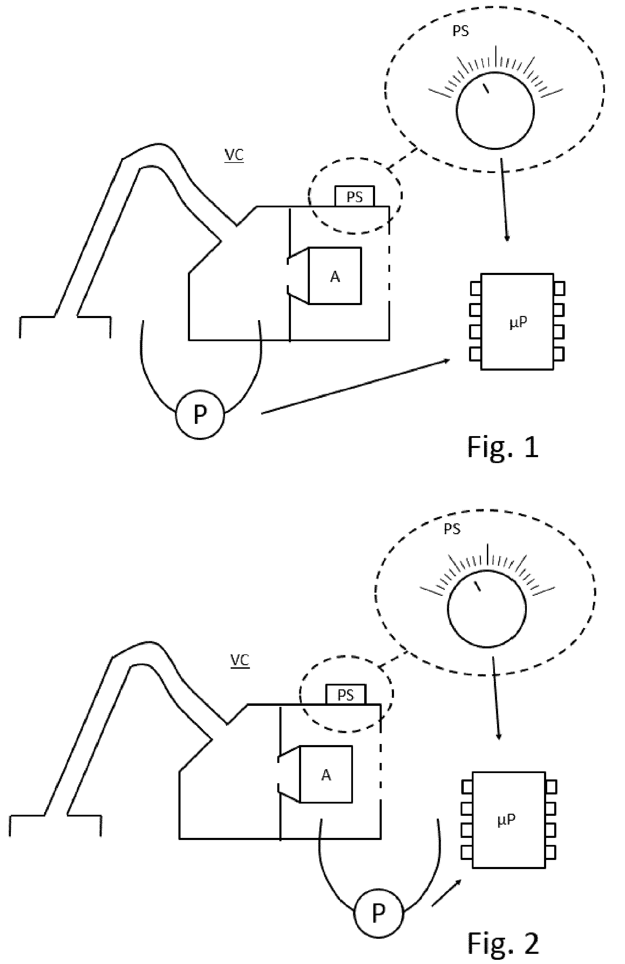

Fig. 1 illustrates an embodiment of a vacuum cleaner VC in which a pressure difference P is measured between on the one hand, a chamber upstream of an aggregate A, and on the other hand, ambient. Controlled by a microprocessor µP, action is taken if abs[P] > P_{threshold}, in which the threshold value P_{threshold} depends on the power setting PS as controlled by a power setting PS control. This power setting control may be a rotary knob or may take any other suitable form (e.g. 3 pushbuttons for a low, a medium and a high power setting PS, or a linear touch sensor for inputting the desired power setting PS).

Alternatively, if the rotation speed N of the aggregate A is used directly, microprocessor µP ensures that action is taken if abs[P] > P_{threshold}, in which the threshold value P_{threshold} depends on the rotation speed N of the aggregate.

Fig. 2 illustrates an embodiment of vacuum cleaner VC in which pressure difference P is measured between on the one hand, a chamber downstream of an aggregate A, and on the other hand, ambient.

Controlled by microprocessor µP, action is taken if abs[P] < P_{threshold}, in which the threshold value P_{threshold} depends on the power setting PS as controlled by a power setting PS control.

Alternatively, if the rotation speed N of the aggregate A is used directly, microprocessor µP ensures that action is taken if abs[P] < P_{threshold}, in which the threshold value P_{threshold} depends on the rotation speed N of the aggregate.

### 2. Pressure difference over a component where the relation between pressure and flow is known and does not change in time.

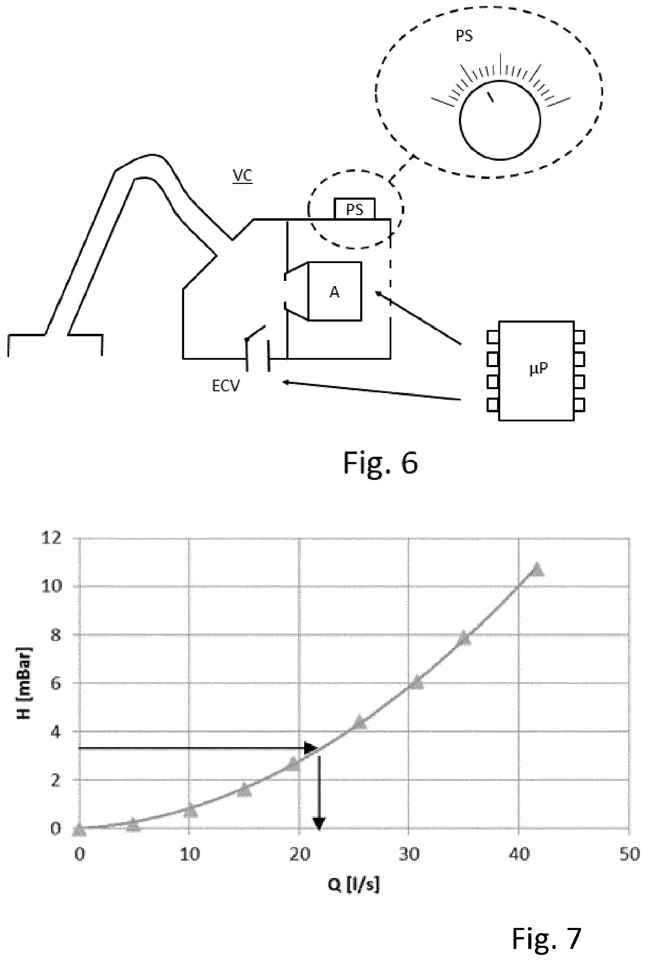

There exists a clear relation between the pressure loss H over a component and the flow rate Q through that component (see Fig. 7). By measuring the pressure difference over this component the flow rate is known. For this, the power setting PS is not necessary. However, the power setting PS has to be known to determine the threshold value of the flow rate (i.e. a lower power setting requires a lower cooling flow).

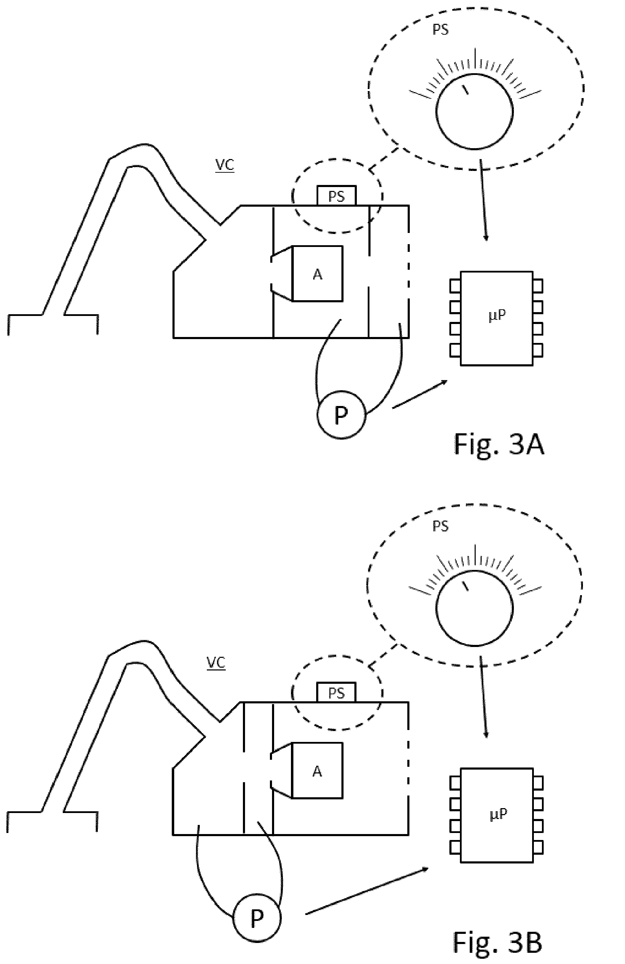

Figs. 3A and 3B illustrate embodiments of vacuum cleaner VC in which pressure difference P is measured over a known component. The known component may be a flow resistance, e.g. a compartment boundary having a hole with a known size. The known component may be downstream of the aggregate A (as shown in Fig. 3A), or upstream of the aggregate A (as shown in Fig. 3B).

Controlled by microprocessor µP, action is taken if abs[P] < P_{threshold}, in which the threshold value P_{threshold} depends on the power setting PS as controlled by a power setting PS control.

Alternatively, if the rotation speed N of the aggregate A is used directly, microprocessor µP ensures that action is taken if abs[P] < P_{threshold}, in which the threshold value P_{threshold} depends on the rotation speed N of the aggregate.

### 3. Pressure difference over the aggregate.

There exists a clear relation between flow rate and pressure of the aggregate in a specific setting (see Fig. 9). If the pressure H over the aggregate A and the power setting PS (and thus the QH-curve of the aggregate A) are known, the flow rate Q can be determined. For every power setting PS the required cooling flow is different (as a lower power setting PS requires a lower cooling flow). Next to that, for every power setting PS there exists a different relation between pressure H and flow rate Q of the aggregate (see Fig. 9). This means that for every power setting PS a different relation between pressure H and flow rate Q is used to determine whether enough cooling flow is passing through the aggregate A.

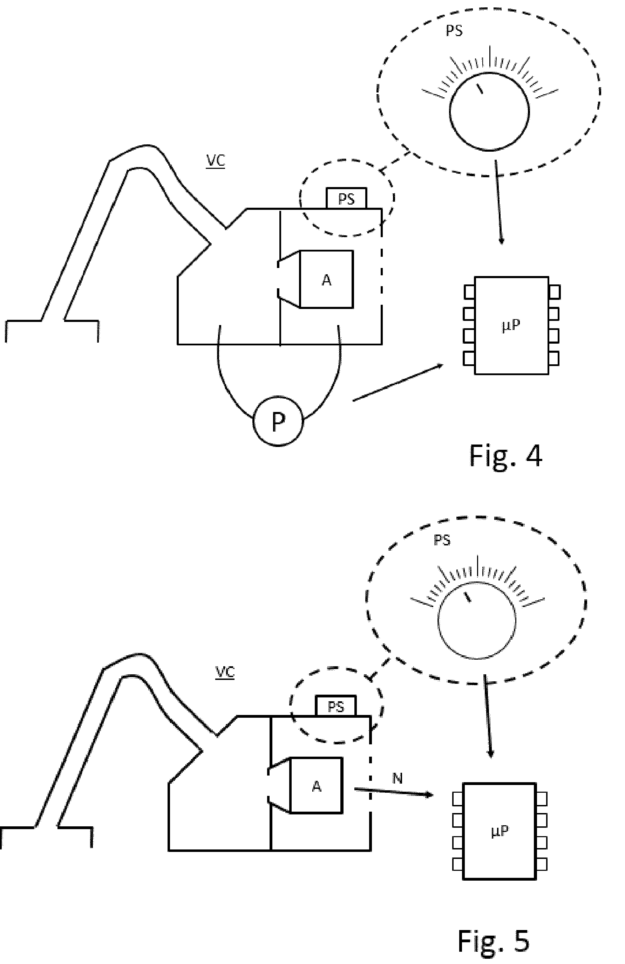

Fig. 4 illustrates an embodiment of vacuum cleaner VC in which pressure difference P is measured over the aggregate A. Controlled by microprocessor µP, action is taken if abs[P] > P_{threshold}, in which the threshold value P_{threshold} depends on the power setting PS as controlled by a power setting PS control.

Alternatively, if the rotation speed N of the aggregate A is used directly, microprocessor µP ensures that action is taken if abs[P] > P_{threshold}, in which the threshold value P_{threshold} depends on the rotation speed N of the aggregate.

### 4. Rotation speed of the aggregate.

There exists a clear relation between flow through the aggregate (at a specific power setting or voltage) and the rotation speed S (see Fig. 7). At a specific power setting the rotation speed S will increase if the pressure H is increased, and therewith the flow rate Q decreases. By determining the rotation speed S of the aggregate, the flow rate Q through the aggregate is known. For every power setting PS the required cooling flow is different (a lower power setting PS requires a lower cooling flow). Next to that, for every power setting PS there exists a different relation between rotation speed S and flow rate Q (see Fig. 8). This means that for every power setting PS a different relation between rotation speed S and flow rate Q is used to determine whether enough cooling flow is passing through the aggregate A.

Fig. 5 illustrates an embodiment of vacuum cleaner VC in which, controlled by microprocessor µP, action is taken if N > N_{threshold}, in which the threshold value N_{threshold} depends on the power setting PS as controlled by the power setting PS control. The rotation speed N of aggregate A may be measured separately, or measured indirectly using the current through the motor, or by carrying out signal recognition on voltage peaks at a collector of the motor, or in any other suitable way.

If it is determined that the cooling flow is too low, actions can be taken in order to prevent the aggregate A from overheating or entering into the stall regime. The above data (power setting / rotation speed in combination with pressure difference between a chamber upstream/downstream of the aggregate and ambient, over a known component, or over the aggregate, or the combination of power setting and rotation speed) can be processed in microprocessor µP in order to determine the flow rate Q (using the relation between the rotation speed S and the flow rate Q of the aggregate A corresponding to the imposed power setting PS).

After calculation of the flow rate Q, different actions can be performed if a too low flow rate is encountered:
- (electronically) open a valve upstream of the aggregate A,
- lower the rotation speed of the aggregate. The rotation speed can/will increase again to the value corresponding to the imposed power setting, if the blockage is removed. This option is possible because at a lower rotation speed a lower cooling flow is needed. Of course, lowering the rotation speed to zero (i.e. shutting down the aggregate A) is one way of lowering the speed that is very effective in protecting the aggregate from overheating.

Fig. 6 illustrates an embodiment of vacuum cleaner VC having an electronically controlled valve ECV that is controlled by microprocessor µP, which microprocessor µP alternatively or additionally controls aggregate A to shut it down or at least lower its rotation speed.

It should be noted that the above-mentioned embodiments illustrate rather than limit the invention, and that those skilled in the art will be able to design many alternative embodiments without departing from the scope of the appended claims. The processor µP for protecting the motor-fan aggregate A from overheating and/or entering into a stall regime may very well carry out other functions as well. The processor µP does not need to be a microprocessor; it may be any suitable control unit. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. The mere fact that certain measures are recited in mutually different dependent claims does not indicate that a combination of these measures cannot be used to advantage.

## Claims

1. A vacuum cleaner (VC) comprising:
a motor-fan aggregate (A),
a control for controlling a power setting (PS) of the motor-fan aggregate (A); and
a processor (µP) for protecting the motor-fan aggregate (A) from overheating and/or entering into a stall regime in dependence on an input that is representative of a rotation speed of the motor-fan aggregate (A).

2. A vacuum cleaner as claimed in claim 1, wherein a power setting (PS) of the motor-fan aggregate (A) is used as the input that is representative of a rotation speed of the motor-fan aggregate (A).

3. A vacuum cleaner as claimed in claim 2, wherein the processor (µP) is arranged for protecting the motor-fan aggregate (A) further in dependence on
a pressure difference between on the one hand, a position upstream or downstream of the motor-fan aggregate (A), and on the other hand, ambient, and/or
a pressure difference over a known component, and/or
a pressure difference over the motor-fan aggregate (A), and/or
a rotation speed of the motor-fan aggregate (A).

4. A vacuum cleaner as claimed in claim 1, wherein a current through the motor-fan aggregate (A) is used as the input that is representative of a rotation speed of the motor-fan aggregate (A).

5. A vacuum cleaner as claimed in claim 1 or 4, wherein the processor (µP) is arranged for protecting the motor-fan aggregate (A) further in dependence on
a pressure difference between on the one hand a position upstream or downstream of the motor-fan aggregate (A), and on the other hand, ambient, and/or
a pressure difference over a known component, and/or
a pressure difference over the motor-fan aggregate (A).

6. A vacuum cleaner as claimed in any of the preceding claims, wherein the processor (µP) is arranged for protecting the motor-fan aggregate (A) by opening a valve (ECV) upstream of the motor-fan aggregate (A), and/or by lowering a rotation speed of the motor-fan aggregate (A).
